(19) Europäisches Patentamt
European Patent Office
Office européen des brevets

(11) **EP 2 000 779 A2**

(12) **EUROPEAN PATENT APPLICATION**

(43) Date of publication:
**10.12.2008 Bulletin 2008/50**

(51) Int Cl.:
***G01D 1/18*** *(2006.01)*

(21) Application number: **08251793.9**

(22) Date of filing: **22.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **25.05.2007 GB 0710036**

(71) Applicant: **Goodrich Control Systems Ltd Solihull B90 4LA (GB)**

(72) Inventor: **Henson, Nigel Herbert Warwick CV35 8JQ (GB)**

(74) Representative: **Bailey, Richard Alan**
**Marks & Clerk**
**27 Imperial Square**
**Cheltenham**
**Gloucestershire GL50 1RQ (GB)**

(54) **Fault diagnositics**

(57)     A fault diagnostics technique for use with an engine controller (40) and a hydromechanical device (20) including a memory device (42) comprises the steps of using diagnostics characteristics data stored in the memory device (42) to modify a fault diagnostics algorithm (48) of the engine controller (40), and using the modified fault diagnostics algorithm (48) in conjunction with real time operating data from the hydromechanical device (20) to determine whether the hydromechanical device (20) is operating correctly.

FIG 2

EP 2 000 779 A2

**Description**

This invention relates to fault diagnostics and in particular to a technique permitting the diagnosing of a fault in a hydromechanical unit.

Hydromechanical units are typically of relatively complex form, being made up of a number of parts and sensors arranged to monitor the operation of movement of at least one or some of the moving parts thereof A control unit which, in use, controls the operation of the hydromechanical unit runs a diagnostics algorithm using real time operating data from the hydromechanical unit's sensors to determine whether or not the hydromechanical unit is operating correctly or whether it has developed a fault, a fault being defined as a change in a characteristic of the unit that results in an inability of that unit to perform its intended function.

Manufacturing tolerances on the various parts or components of the hydromechanical unit, including the sensors, must be accommodated without the diagnostics algorithm incorrectly flagging that a fault has occurred. Consequently, the algorithm is typically arranged to operate with relatively wide fault detection limits . By setting wide fault detection limits, although the occurrence of incorrect fault flaggings is reduced, there is a risk that actual faults can go undetected, reducing system performance.

By way of example, the hydromechanical unit may include a movable component the position of which is monitored by a sensor in the form of a linear variable differential transducer (LVDT). An LVDT has an input coil, connected to an AC source, and two output coils. By measuring the voltages induced in the output coils, the position of a movable core connected to and movable with the movable component can be sensed. The position of the core is related to the voltage ratio:

$$\frac{Va - Vb}{Va + Vb}$$

where Va and Vb are the voltages induced in the two output coils.

In such an arrangement, faults are sensed or flagged if either Va or Vb fall outside of predetermined ranges. Further, the ratios of Va and Vb to Vex, the excitation voltage, are calculated and a fault flagged in the event that:

$$\frac{Va + Vb}{Vex}$$

which is usually substantially constant, falls outside of a predetermined range.

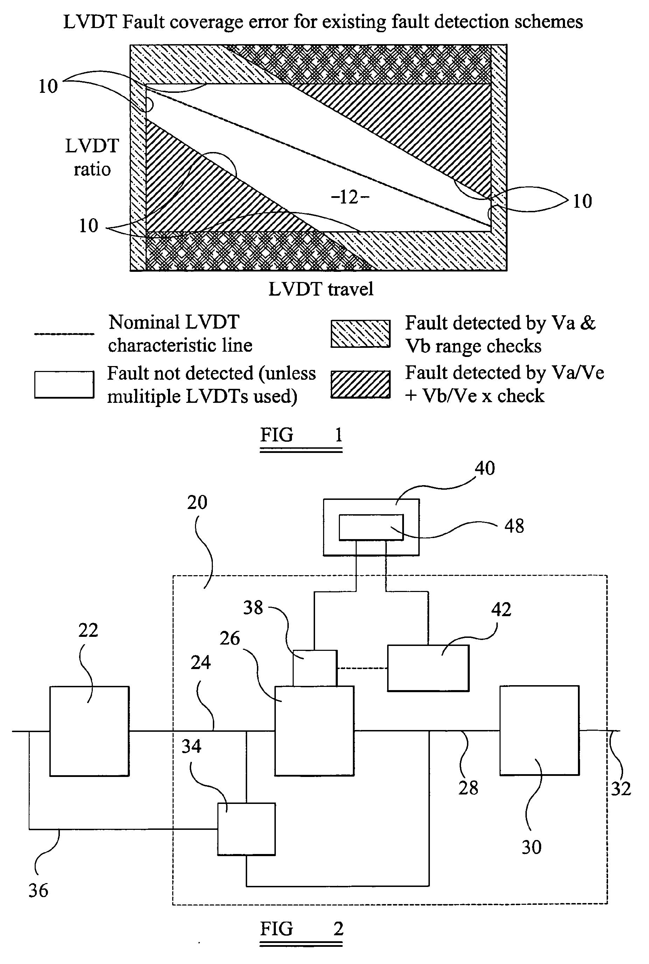

Figure 1 is a chart showing, diagrammatically, the boundaries or limits 10 outside of which a fault is typically flagged. It will be apparent that the limits 10 are relatively widely spaced, and so there is a large area 12 in which no fault is flagged, even if a fault has actually occurred.

Over the working life of an LVDT its operating characteristics change as a result of mechanical and thermal degradation. These changes must further be accommodated by the diagnostics algorithm.

US 7138794 describes a system for detecting faults in LVDTs. It operates by checking whether or not the sum of the output voltages, which should be substantially constant, falls within a predetermined range, flagging a fault if the sum value falls outside of the predetermined range. By comparing the sum value to a predetermined value, it may be possible to take remedial actions to accommodate the fault and thereby allow continued operation in a relatively efficient manner.

EP 1505279 describes an arrangement in which a hydromechanical unit incorporates a memory device upon which is stored, for example, calibration data for use by an associated control unit in controlling the operation of the hydromechanical unit. One purpose of this is to accommodate the use of unmatched components in a dual lane system.

It is an object of the present invention to enable improved reliability in the detection and diagnosis of faults.

According to the present invention there is provided a fault diagnostics technique for use with an engine controller and a hydromechanical device including a memory device, the technique comprising the steps of using diagnostics characteristics data stored in the memory device to modify a fault diagnostics algorithm of the engine controller, and using the modified fault diagnostics algorithm in conjunction with real time operating data from the hydromechanical device to determine whether the hydromechanical device is operating correctly.

The diagnostics characteristics data can be derived prior to installation of the hydromechanical device by conducting tests thereon and, consequently, rather than take into account the full range of manufacturing tolerances when setting the limits beyond which a fault condition is flagged by the diagnostics algorithm, the limits can be set more tightly so as to reflect the actual operating characteristics of the particular hydromechanical unit. In use, therefore, the fault diagnostics technique can be used to identify or diagnose the occurrence of faults more reliably and accurately than with existing arrangements.

The hydromechanical device may include a sensor, for example in the form of a linear variable differential transducer (LVDT) or rotary variable differential transducer (RVDT), the output of which forms the real time operating data. Alternatively, the device may include a torque motor with the torque motor coil resistance being used as the real time operating data, for example.

The hydromechanical device may comprise, for example, a fuel metering unit for an aircraft engine.

The engine controller may be a single channel system or may be a multi-channel system. Where used with a multi-channel system, cross-checking between the operating data of the channels may be used to identify the occurrence of a fault. By use of the present invention, it may be possible to determine with which of the channels the fault is associated.

It has been found that temperature variations can have a relatively large impact on the characteristics of electronic devices such as LVDTs and torque motors, and that this has to be allowed for in the fault detection limits applied to the respective devices. The present invention can determine an approximate real time temperature from the variation in a specific characteristic of the multiple devices or channels within the system relative to calibration data for that specific characteristic that is stored in the memory device. One such specific characteristic that could be used to determine an approximate temperature is torque motor coil resistance. This approximate temperature information can be used to enhance fault detection capability, through adjustment of the fault detection algorithm in the engine controller, without the need for a specific temperature measurement sensor, which would add unnecessary cost and complexity to the system.

The invention will further be described, by way of example, with reference to the accompanying drawings, in which:

> Figure 1 is a chart illustrating the fault detection limits of a typical arrangement;
> Figure 2 is a diagram illustrating one embodiment of the invention; and
> Figure 3 is a chart similar to Figure 1 illustrating the benefits of the invention.

Referring firstly to Figure 2 there is illustrated a fuel metering unit 20 arranged to be supplied with fuel from a high pressure pump 22. The pump 22 supplies fuel to a supply line 24 which is connected to a metering valve 26. A delivery line 28 from the metering valve 26 supplies fuel to a pressure raising and shut-off valve 30 from which fuel is delivered along a line 32 to a burner of an associated engine. A spill valve 34 is connected across the metering valve 26 and arranged to maintain a substantially constant pressure drop between the supply and delivery lines 24, 28, the spill valve 34 operating to spill fuel from the supply line 24 to a low pressure side of the pump 22 along a spill line 36 in the event that the pressure drop across the metering valve 26 rises above a predetermined level.

The metering valve 26 includes a movable valve member the position of which determines the rate at which fuel is supplied through the metering valve 26 to the delivery line 28. An LVDT 38 is arranged to monitor the position of the movable member of the metering valve 26, the output of the LVDT 38 being supplied, in use, to an engine control unit 40 operable to control the operation of fuel metering unit 20 and the associated engine via control lines (not shown).

The fuel metering unit 20 further includes a memory device 42 in which is stored diagnostics characteristics data.

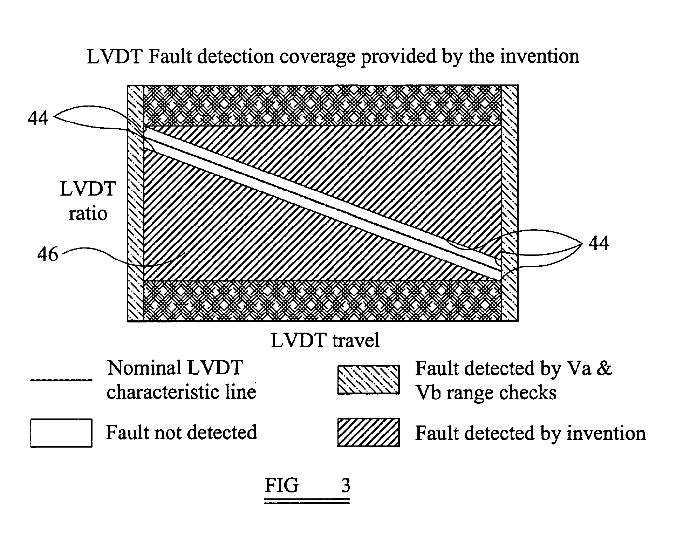

Prior to installation of the fuel metering unit 20, the operation of the fuel metering unit 20 is tested to derive diagnostics characteristics data which is stored in the memory 42. The diagnostics characteristics data stored in the memory device 42 is representative of the actual operation of the fuel metering unit 20 and thus allows derivation of limits 44, as illustrated in Figure 3, defining a relatively narrow band 46 of operation, outside of which it is deduced that a fault has arisen.

In use, once the fuel metering unit 20 has been installed, the stored diagnostics characteristics data from the memory 42 is copied to the engine control unit 40 and used to modify a fault diagnosis algorithm 48 contained therein. Once the algorithm 48 has been so modified, data supplied in real time from the operation of the LVDT 38 is monitored by the algorithm 48 to determine whether or not the LVDT 38 is operating within the permitted band 46 or whether the operation of the LVDT has moved outside of the permitted band 46. If the operation of the LVDT 38 has crossed one or more of the limits 44 and so lies outside of the permitted band 46, then the engine control unit 40 is provided with a signal indicative of the occurrence of a fault in the fuel metering unit 20.

Comparing Figure 3 with Figure 1, Figures 1 and 3 being drawn to substantially the same scale, it will be appreciated that the band 46 of Figure 3 is considerably narrower than the band 12 of Figure 1, thus the occurrence of a fault condition is more likely to be sensed by the arrangement of the present invention than by typical arrangements. Consequently, fault diagnostics can be undertaken more accurately and effectively. This is achieved because, rather than having to take into account the possible manufacturing tolerances of each component of the fuel metering unit 20 in deriving the limits 44, the actual operating characteristics are used.

As the invention allows the occurrence of faults to be diagnosed fairly quickly, significant degradation of the performance of the system over a period of time can be avoided.

Although not illustrated in the accompanying drawings, the fuel metering unit 20 may be provided with a temperature sensor the output of which is supplied to the engine control unit 40 and used by the algorithm 48 in determining whether or not the output of the LVDT 38 falls within the permitted limits 44, thereby permitting accommodation of the effects of temperature variations on the operation of the LVDT 38.

The engine control unit may be a single channel arrangement, or alternatively may be a multi-channel, for example dual channel, arrangement in which, at any given time, just one channel is being used for control purposes. In such a multi-channel arrangement, cross-checking of the operating data of the channels may be used to ensure that the differences between the operating data of the channels are below predetermined amounts. If the operating data of the channels differs by an amount exceeding the predetermined level, then it is deduced that there is a fault in one or other (or both) of the channels. In typical multi-channel arrangements it has not been possible to identify in which of the channels the fault has occurred, but rather simply that a fault has occurred. In the arrangement of the invention, it may be possible to identify in which channel the fault has occurred, which will enable appropriate action to be taken in determining the future control of the engine and provide more detailed information for use in maintenance operations.

It has been found that temperature variations can have a relatively large impact on the characteristics of electronic devices such as LVDTs and torque motors, and that this has to be allowed for in the fault detection limits applied to the respective devices. The present invention can determine an approximate real time temperature from the variation in a specific characteristic of the multiple devices or channels within the system relative to calibration data for that specific characteristic that is stored in the memory device. One such specific characteristic that could be used to determine an approximate temperature is torque motor coil resistance. This approximate temperature information can be used to enhance fault detection capability, through adjustment of the fault detection algorithm in the engine controller, without the need for a specific temperature measurement sensor, which would add unnecessary cost and complexity to the system.

It will be appreciated that a wide range of modifications and alterations may be made to the arrangement described hereinbefore without departing from the scope of the invention. Further, although described in relation to fuel metering units, it will be appreciated that the invention is applicable to other forms of hydromechanical unit or device.

Another advantage of the invention is that it enables any one of a number of engine control units to be used with any one of a number of fuel metering units, rather than requiring matching of the fuel metering unit to the engine control system.

## Claims

1. A fault diagnostics method for use with an engine controller (40) and a hydromechanical device (20) including a memory device (42), the method comprising the steps of using diagnostics characteristics data stored in the memory device (42) to modify a fault diagnostics algorithm (48) of the engine controller (40), and using the modified fault diagnostics algorithm (48) in conjunction with real time operating data from the hydromechanical device (20) to determine whether the hydromechanical device (20) is operating correctly.

2. A method according to Claim 1, wherein the hydromechanical device (20) includes a sensor (38), the output of which forms the real time operating data.

3. A method according to Claim 2, wherein the sensor (38) comprises a linear variable differential transducer (LVDT) or rotary variable differential transducer (RVDT).

4. A method according to Claim 1, wherein the hydromechanical device (20) includes a torque motor, the torque motor coil resistance data being used as the real time operating data.

5. A method according to any of the preceding claims, wherein the hydromechanical device (20) comprises a fuel metering unit for an aircraft engine.

6. A method according to any of the preceding claims, wherein the engine controller (40) is a single channel system.

7. A method according to any of Claims 1 to 5 wherein the engine controller (40) is a multi-channel system.

8. A method according to Claim 7, wherein cross-checking between the operating data of the channels is used to identify the occurrence of a fault.

LVDT Fault coverage error for existing fault detection schemes

LVDT
ratio

LVDT travel

| | | | |
|---|---|---|---|
| ⎯ ⎯ ⎯ ⎯ | Nominal LVDT characteristic line | ▨ | Fault detected by Va & Vb range checks |
| ☐ | Fault not detected (unless mulitiple LVDTs used) | ▨ | Fault detected by Va/Ve + Vb/Ve x check |

FIG     1

FIG     2

LVDT Fault detection coverage provided by the invention

44

LVDT
ratio

46

44

LVDT travel

——— Nominal LVDT
characteristic line

Fault not detected

Fault detected by Va &
Vb range checks

Fault detected by invention

FIG 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7138794 B
- EP 1505279 A